Europäisches Patentamt

European Patent Office

Office européen des brevets

(11) Numéro de publication: **0 087 540**
**B1**

(12) **FASCICULE DE BREVET EUROPEEN**

(45) Date de publication du fascicule du brevet:
**27.08.86**

(21) Numéro de dépôt: **82402202.4**

(22) Date de dépôt: **02.12.82**

(51) Int. Cl.⁴: **F 25 B 29/00,** F 25 B 15/00,
C 09 K 5/04

(54) **Procédé de production de froid et/ou de chaleur mettant en oeuvre le dioxyde de carbone et un fluide condensable.**

(30) Priorité: **07.01.82 FR 8200272**

(43) Date de publication de la demande:
**07.09.83 Bulletin 83/36**

(45) Mention de la délivrance du brevet:
**27.08.86 Bulletin 86/35**

(84) Etats contractants désignés:
**AT BE CH DE GB IT LI NL SE**

(56) Documents cités:
**EP - A - 0 070 756**
**FR - A - 676 668**
**FR - A - 2 321 098**
**US - A - 1 678 277**
**US - A - 1 781 541**
**US - A - 1 848 918**
**US - A - 1 922 217**
**US - A - 2 182 453**
**US - A - 2 248 178**
**US - A - 2 290 532**
**US - A - 3 854 301**

(73) Titulaire: **INSTITUT FRANCAIS DU PETROLE, 4, Avenue de Bois-Préau, F-92502 Rueil-Malmaison (FR)**

(72) Inventeur: **Rojey, Alexandre, 29,33, rue Henri Regnault, F-92380 Garches (FR)**
Inventeur: **Cheron, Jacques, 76 bis, rue du Maréchal Foch, F-78600 Maisons Laffitte (FR)**

ACTORUM AG

## Description

La présente invention est relative à un nouveau procédé de production de froid et/ou de chaleur au moyen d'un cycle mettant en œuvre le dioxyde de carbone et un fluide condensable.

Les procédés de production de froid et/ou de chaleur au moyen de cycles à absorption utilisent généralement les effets thermiques qui se produisent lors de l'absorption et de la désorption d'un soluté dans un solvant à des niveaux de température distincts découlant de conditions de pression opératoires différentes.

De tels procédés nécessitent l'utilisation de pompes ayant pour objet de faire circuler le solvant d'une zone à relativement basse pression à une autre zone de plus haute pression, avec les inconvénients connus tels que les risques de dégazage des solutions en aspiration des pompes ou phénomènes de cavitation, la consommation énergétique associée à cette circulation, les organes de sécurité nécessaires pour éviter l'introduction de fluide à haute pression dans les enceintes normalement utilisées à basse pression.

Le brevet FR-A-2 454 591 illustre, par sa Figure 1A, le schéma de fonctionnement classique d'un système à absorption tel qu'il est communément utilisé avec des couples classiques tels que eau-ammoniac ou eau-bromure de lithium. Le brevet US 2 290 532 et la demande de brevet EP-A-70756 (appartenant à l'état de la technique aux termes de l'Article 54(3) de la CBE) décrivent l'emploi de couples différents, les couples dioxyde de carbone-solvant, le solvant étant par exemple un aminoalcool.

Des cycles à absorption ont été modifiés par l'introduction d'un gaz inerte dont l'objet est de maintenir constante la pression dans les différents organes des appareils.

De telles installations, décrites par exemple dans l'ouvrage «Thermodynamique Technique» page 744 de M. Bailly, Editions Bordas 1971, fonctionnent généralement pour la production de froid en employant comme agent réfrigérant, comme agent absorbant et comme gaz inerte respectivement de l'ammoniac, de l'eau et de l'hydrogène; un gaz inerte (hydrogène) est également présent dans US-A-2 290 532. On connaît les problèmes de sécurité que cela induit en particulier par le caractère toxique de l'ammoniac et les risques inhérents aux limites d'explosivité de l'hydrogène et d'inflammabilité de l'ammoniac. Les cycles utilisant l'eau comme fluide de travail et un sel tel que le bromure de lithium présentent d'autres inconvénients: pression de fonctionnement très basse, risques de gel et de cristallisation du sel.

Un autre cycle à absorption a été proposé dans les brevets US-A-1 781 541 et 2 248 178, mettant en œuvre le couple ammoniac-eau ($NH_3$–$H_2O$) et un fluide auxiliaire condensable tel que le butane ou l'isobutane. L'ammoniac désorbé est condensé puis évaporé en mélange avec le butane ou l'isobutane. Un tel cycle est conçu pour un fonctionnement pratiquement isobare en ses différents constituants, les légères variations de pression étant utilisées aux fins de circulation des fluides en phase liquide ou en phase gazeuse.

Le dispositif de US-A-1 781 541 possède l'inconvénient supplémentaire de ne pas toujours fonctionner correctement, car on peut difficilement éviter la condensation de l'ammoniac dans les conditions de pression et de température régnant dans l'évaporateur. L'évaporation du butane est alors considérablement amoindrie et la condensation exothermique de l'ammoniac transforme l'évaoporateur en source chaude au lieu de source froide.

La présente invention a donc pour objet un nouveau procédé de production de froid et/ou de chaleur selon un cycle à absorption, procédé qui ne présente pas les inconvénients ci-dessus décrits.

Le procédé selon l'invention se caractérise par l'emploi d'une phase gazeuse de dioxyde de carbone qui subit une étape d'absorption dans une phase solvant liquide, suivie d'une étape de désorption opérée à plus haute température. Il se caractérise également par l'emploi d'un gaz condensable choisi, de préférence, parmi les hydrocarbures et les hydrocarbures halogénés. Le procédé diffère du procédé connu utilisant l'ammoniac en ce qu'il n'y a pas formation d'une phase liquide de $CO_2$ mais seulement une absorption de $CO_2$ gazeux dans un solvant.

Le dioxyde de carbone est un fluide très courant et qui présente de nombreux avantages, notamment un bas prix de revient et une grande sécurité d'emploi.

Les hydrocarbures et les hydrocarbures halogénés, notamment les dérivés de substitution chloro-fluorés du méthane et de l'éthane, sont des fluides d'usage industriel dans les procédés de production de froid et/ou de chaleur. Outre leur caractère non toxique leur masse moléculaire élevée ne leur confère pas les propriétés de diffusion si gênantes de l'hydrogène.

Il a été découvert et c'est là l'objet de la présente invention que contrairement à ce que les observations précédentes laissaient supposer, il est possible de mettre en œuvre avantageusement le dioxyde de carbone en présence d'un gaz condensable à condition d'opérer selon le procédé décrit ci-après.

En définitive le procédé selon l'invention comprend les étapes suivantes:

a) on met en contact, dans une étape d'absorption/condensation, du solvant avec une phase gazeuse renfermant un fluide auxiliaire et du dioxyde de carbone, de manière à obtenir une solution de dioxyde de carbone dans le solvant et une phase liquide de fluide auxiliaire, la phase liquide de fluide auxiliaire étant au moins en partie immiscible avec la solution de dioxyde de carbone dans le solvant, le fluide auxiliaire étant un fluide vaporisable dans les conditions de l'étape (e) et condensable dans les conditions de l'étape (a), et on transmet la chaleur d'absorption du dioxyde de carbone dans le solvant et la chaleur de condensation du fluide auxiliaire à un fluide extérieur,

b) on sépare la solution de dioxyde de carbone dans le solvant de la phase liquide de fluide auxiliaire,

c) on envoie la solution de dioxyde de carbone dans le solvant à une étape de désorption et l'on soumet cette solution aux conditions de désorption, en prélevant la chaleur de désorption sur un fluide extérieur, de manière à obtenir du solvant appauvri en dioxyde de carbone et une phase vapeur riche en dioxyde de carbone et on recycle ledit solvant, appauvri en dioxyde de carbone, à l'étape d'absorption/condensation (a),

d) on mélange au moins une partie de la phase liquide de fluide auxiliaire, séparée à l'étape (b), avec au moins une partie de la phase vapeur riche en dioxyde de carbone obtenue dans l'étape de désorption (c),

e) on soumet le mélange obtenu à l'étape (d) à une étape d'évaporation, en prélevant la chaleur d'évaporation du fluide auxiliaire sur un fluide extérieur et on recueille une phase gazeuse renfermant du fluide auxiliaire et du dioxyde de carbone, et

f) on soumet la phase gazeuse obtenue à l'étape (e) à une étape d'absorption/condensation (a).

Une variante du procédé selon l'invention comprend les étapes suivantes:

a) on met en contact, dans une étape d'absorption/condensation, du solvant avec une phase gazeuse renfermant un fluide auxiliaire et du dioxyde de carbone, de manière à obtenir une solution de dioxyde de carbone dans le solvant et une phase liquide de fluide auxiliaire, la phase liquide de fluide auxiliaire étant au moins en partie immiscible avec la solution de dioxyde de carbone dans le solvant, le fluide auxiliaire étant un fluide vaporisable dans les conditions de l'étape (f) et condensable dans les conditions de l'étape (a), et on transmet la chaleur d'absorption du dioxyde de carbone dans le solvant et la chaleur de condensation du fluide auxiliaire à un fluide extérieur,

b) on sépare la solution de dioxyde de carbone dans le solvant de la phase liquide de fluide auxiliaire,

c) on envoie la solution de dioxyde de carbone dans le solvant à une étape de désorption et l'on soumet cette solution aux conditions de désorption, en prélevant la chaleur de désorption sur un fluide extérieur, de manière à obtenir du solvant appauvri en dioxyde de carbone et une phase vapeur riche en dioxyde de carbone et on recycle ledit solvant, appauvri en dioxyde de carbone, à l'étape d'absorption/condensation (a),

d) on mélange la phase vapeur riche en dioxyde de carbone, obtenue à l'étape (c), avec du solvant, de façon à dissoudre le dioxyde de carbone dans ledit solvant, on évacue la chaleur de dissolution vers un milieu externe et on détend la pression,

e) on mélange au moins une partie de la phase liquide de fluide auxiliaire, séparée à l'étape (b), avec le produit de détente de l'étape (d),

f) on soumet le mélange obtenu à l'étape (e) à une étape d'évaporation/désorption, en prélevant la chaleur d'évaporation et de désorption sur un fluide extérieur, on sépare le solvant désorbé résultant de la phase gazeuse résultante renfermant du fluide auxiliaire et du dioxyde de carbone, et on renvoie à l'étape (d) au moins une partie dudit solvant désorbé, et

g) on soumet la phase gazeuse séparée à l'étape (f) à l'étape d'absorption/condensation (a).

Il n'est pas nécessaire, dans ce dernier cas, que le dioxyde de carbone ait été entièrement libéré de sa solution avant de le mélanger, à l'étape (d), avec la phase liquide de condensation du fluide auxiliaire, et l'on préfère mélanger ladite solution détendue avec ladite phase liquide de condensation du fluide auxiliaire et envoyer le mélange résultant à l'étape (f) où l'évaporation du fluide auxiliaire est au moins en partie simultanée à la libération du dioxyde de carbone de sa solution. Au terme de l'évaporation, on sépare alors la phase liquide désorbée de la phase gazeuse renfermant le fluide auxiliaire gazeux et le dioxyde de carbone gazeux; la phase liquide désorbée est renvoyée à la zone de mélange de la phase vapeur, riche en dioxyde de carbone, obtenue à l'étape (c) avec une phase liquide de solvant du dioxyde de carbone.

Les solvants sont des solvants du dioxyde de carbone, le solvant mélangé avec la phase riche en dioxyde de carbone, obtenue à l'étape (c) (T) pouvant être de même composition que le solvant obtenu à l'étape (c) ou être de composition différente.

La Figure 1 représente un premier mode de réalisation de l'invention.

La Figure 2 représente un autre mode de réalisation de l'invention permettant d'augmenter les effets de production de froid ou de chaud du procédé.

La Figure 3 illustre un exemple de réalisation de l'invention utilisant le dioxyde de carbone, une solution aqueuse de diéthanolamine huit fois normale et de l'isopentane.

La Figure 4 est relative à un autre mode de réalisation de l'invention dans lequel les fluides utilisés circulent sans requérir de puissance mécanique externe.

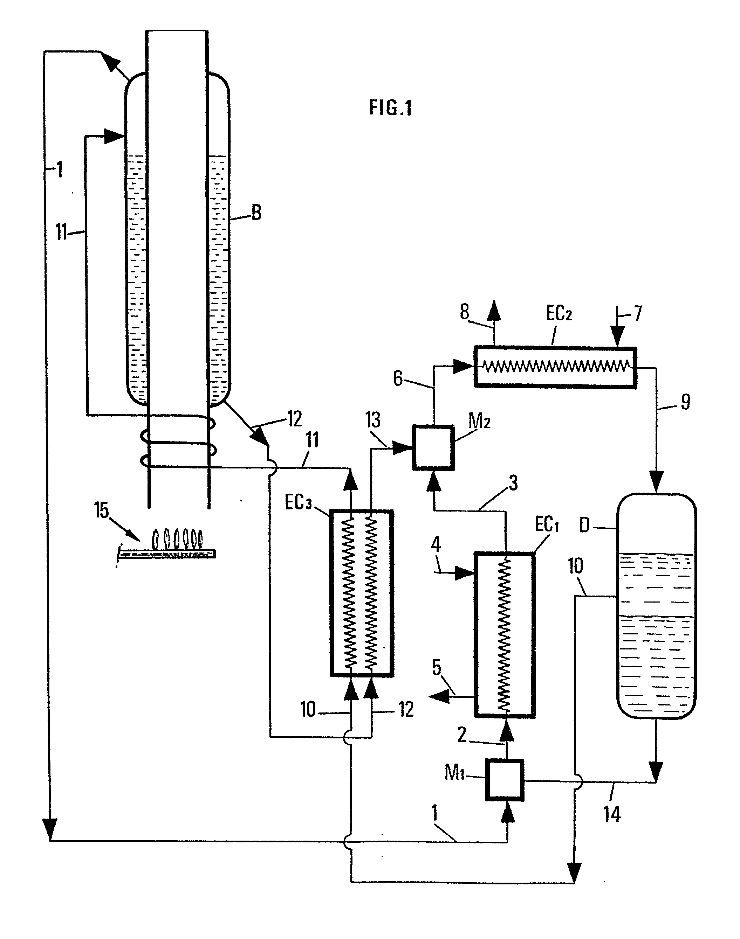

Selon le cycle schématisé par la Figure 1, la solution de dioxyde de carbone dans un solvant approprié (S) est chauffée dans le bouilleur B par une source externe 15.

Le dioxyde de carbone désorbé est évacué par la canalisation 1 vers un mélangeur M1 qui reçoit de la canalisation 14 une certaine quantité de composé halogéné liquide (ou autre fluide auxiliaire liquide) provenant du décanteur D.

Le mélange de dioxyde de carbone gazeux et de composé halogéné liquide parvient par la canalisation 2 à l'échangeur (évaporateur) EC1 où la phase liquide est entièrement vaporisée par l'apport thermique d'un fluide externe (conduits 4 et 5). Le mélange de vapeurs est évacué par le conduit 3 puis introduit dans un mélangeur M2 qui reçoit une solution de solvant appauvrie en dioxyde de carbone (conduit 13).

Les fluides sont acheminés vers un échangeur EC2 dans lequel le dioxyde de carbone est absorbé par la solution de solvant en cédant de la chaleur à un fluide externe entrant par le conduit 7 et évacué par le conduit 8.

La disparition, par absorption, du dioxyde de carbone modifie, en la réduisant fortement, la pression partielle de ce gaz dans la phase vapeur régnant dans l'échangeur. La pression totale n'étant pas modifiée, en l'absence de vanne de détente, la pression partielle du gaz condensable s'accroît.

Il se produit donc une condensation de ce fluide dans l'échangeur EC2 avec fourniture supplémentaire de chaleur au fluide externe circulant entre les conduites 7 et 8.

La solution de dioxyde de carbone dans son solvant ainsi que le liquide non miscible avec ladite solution sont évacués par le conduit 9 et introduits dans le décanteur D. Par différence de masse spécifique les phases liquides non miscibles se séparent. Le fluide auxiliaire condensable supposé plus lourd est repris à la base du décanteur D par la canalisation 14 pour être introduit dans le mélangeur M1.

La solution de dioxyde de carbone supposée plus légère est évacuée par le conduit 10, traverse l'échangeur EC3 pour y être réchauffée avant d'être introduite par entraînement gazeux dans la canalisation 11 vers le bouilleur B.

La solution appauvrie en dioxyde de carbone est évacuée par le conduit 12, cède une partie de sa chaleur dans l'échangeur EC3 et est introduite par le conduit 13 dans le mélangeur M2.

Ainsi en cas de fonctionnement en pompe à chaleur selon le schéma précité, de la chaleur à haut niveau thermique est fournie au bouilleur B et de la chaleur à bas niveau thermique est fournie à l'évaporateur EC1.

On recueille de la chaleur utile à moyen niveau thermique dans l'échangeur EC2 où se conjuguent une absorption du dioxyde de carbone et une condensation d'un fluide auxiliaire.

En cas de fonctionnement en réfrigération la source froide est constituée par l'évaporateur EC1.

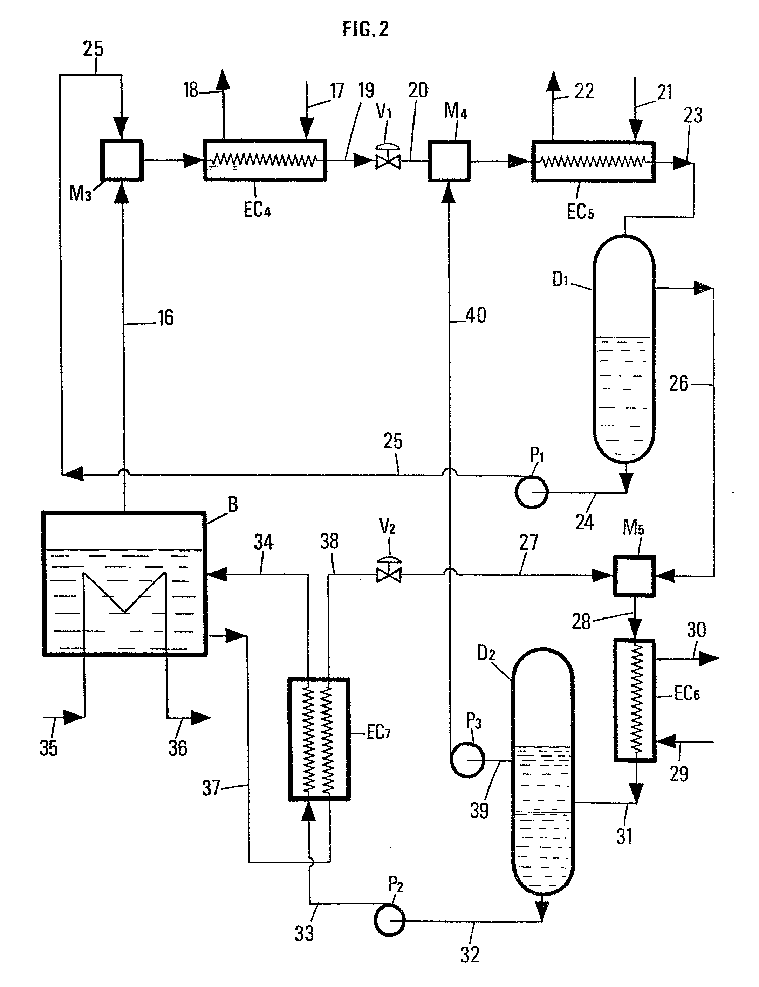

Un autre mode de réalisation de l'invention mettant en œuvre le dioxyde de carbone, un solvant et un fluide auxiliaire condensable est illustré par le schéma de la figure 2. Le dioxyde de carbone désorbé dans le bouilleur B est évacué par le conduit 16 vers le mélangeur M3 dans lequel est introduite (ligne 25) une solution de dioxyde de carbone dans un solvant. Cette solution s'enrichit davantage en dioxyde de carbone dans l'échangeur EC4 où l'on évacue vers un fluide externe, entrant dans l'échangeur EC4 par le conduit 17 et évacué par le conduit 18, la chaleur développée par la réaction d'absorption.

La solution enrichie est alors menée par le conduit 19 à une vanne de détente V1. Le conduit 20 reprend cette solution qui se mélange en M4 avec une phase liquide de fluide auxiliaire et l'ensemble est introduit dans l'échangeur EC5 pour y être vaporisé partiellement en prenant de la chaleur à un fluide extérieur (lignes 21 et 22). L'effluent est envoyé au décanteur D1 par la ligne 23.

Le décanteur D1 permet de séparer la phase liquide (solution relativement appauvrie de dioxyde de carbone dans le solvant) de la phase vapeur contenant du dioxyde de carbone et des vapeurs de fluide auxiliaire. La phase liquide extraite par la ligne 24 du décanteur D1 est réintroduite par la pompe P1 et le conduit 25 dans le mélangeur M3.

La phase vapeur extraite par le conduit 26 est introduite dans le mélangeur M5 où parvient également, par le conduit 27, une solution pauvre de soluté dans le solvant. L'ensemble parvient par le conduit 28 dans l'échangeur EC6 pour une réaction d'absorption du dioxyde de carbone dans la solution. La chaleur développée par cette réaction est récupérée par un fluide externe (conduits 29 et 30).

La pression totale ne variant pas, il s'ensuit que, par disparition du $CO_2$, la pression partielle du fluide auxiliaire s'accroit pour atteindre sa tension de vapeur dans les conditions opératoires régnant dans l'échangeur EC6. Ceci provoque une condensation du fluide auxiliaire en une phase liquide immiscible ou peu miscible avec la solution de $CO_2$. Cette condensation est accompagnée d'un effet thermique récupéré également par le fluide externe.

Le mélange de liquides récupéré par le conduit 31 est envoyé dans un décanteur D2 où, par gravité, les phases liquides non miscibles se séparent. En admettant par exemple que la solution de $CO_2$ soit la plus lourde elle est reprise par le conduit 32 et transportée par la pompe P2 et le conduit 33 vers l'échangeur EC7 pour être réchauffée avant son introduction par la canalisation 34 dans le bouilleur B.

L'augmentation de sa température, opérée par un fluide externe (conduits 35 et 36) permet une désorption du dioxyde de carbone et la solution appauvrie en ce gaz retourne par le conduit 37, l'échangeur EC7, et le conduit 38 à une vanne de détente V2 pour être recyclée de nouveau par le conduit 27 dans le mélangeur M5. Le fluide auxiliaire, à l'état liquide, est repris par le conduit 39 et transféré par la pompe de circulation P3 et le conduit 40 dans le mélangeur M4.

Ainsi, en cas de fonctionnement en pompe à chaleur selon le schéma de la figure 2, de la chaleur à haut niveau thermique est fournie au bouilleur B et de la chaleur à bas niveau thermique est fournie à l'échangeur EC5. On recueille de la chaleur utile à moyen niveau thermique dans l'échangeur EC4 et dans l'échangeur EC6. En cas de fonctionnement en réfrigération la source froide est constituée par l'échangeur EC5.

Le mode de réalisation de l'invention illustré par le schéma de la figure 2 présente donc des avantages nouveaux par rapport aux techniques faisant partie de l'art antérieur.

On observe en effet que dans un procédé classique d'absorption, tel que schématisé sur la figure 1 du brevet français 2 454 591, la quantité de chaleur récupérable sur le milieu extérieur ou sur un fluide externe est sensiblement égale à la quantité de chaleur introduite à haut niveau dans le bouilleur.

Avec l'invention telle qu'elle est illustrée par le procédé schématisé figure 2 la récupération de chaleur sur le milieu extérieur ou sur un fluide externe dans l'échangeur EC5 est augmentée de celle provenant de la vaporisation du fluide auxiliaire dans un cycle ne mettant en œuvre que des produits bon marché et sans danger tels que CO2, des solvants usuels et des hydrocarbures ou des composés halogénés.

Le fluide (F) doit répondre à des conditions essentielles:

1. Il doit être au moins partiellement immiscible avec la solution de dioxyde de carbone dans le solvant (S).

2. A la température de sortie de l'étape d'absorption du dioxyde de carbone dans le solvant (S), il doit posséder une tension de vapeur inférieure à la pression totale régnant dans l'étape d'évaporation.

Tout liquide satisfaisant aux conditions ci-dessus et capable de dissoudre le dioxyde de carbone réversiblement (c'est-à-dire capable de libérer le dioxyde de carbone par chauffage subséquent de la solution) peut être utilisé comme solvant S. Sous cette réserve de réversibilité, les solvants peuvent appartenir à une famille chimique quelconque et à titre d'exemple à celle des amines, en particulier les alcanolamines, des cétones, des amides, des ethers, des alcools, des sulfones, des sulfoxydes, des carbonates, des esters carboxyliques ou des esters phosphoriques. Des solvants spécifiques, indiqués comme exemples, sont l'eau, le diéthylène glycol, le N-méthyl pyrrolidone, le tri-n-butyl phosphate, le sulfolane, le diméthylsulfoxyde, le carbonate de propylène, le triacétate de glycol, l'acétate de méthoxy diéthylène glycol, le diméthylether du polyethylène glycol, le méthanol, les solutions de carbonate de sodium et de carbonate de potassium, le cyanoacetate de méthyle, le diméthyl-formamide, le glutaronitrile, les méthyl isopropyl ethers d'oligoéthyleneglycol et les solutions aqueuses de mono-, di- ou tri-ethanolamine, de mono-di- ou tri-propanolamine ou de morpholine.

Le fluide (F) pourra être un fluide de volatilité comparable à celle du dioxyde de carbone et on peut choisir par exemple un hydrocarbure dont le nombre d'atomes de carbone est compris entre 3 et 10 ou un hydrocarbure halogéné renfermant 1–4 atomes de carbone tel que le trichlorotrifluoro-roéthane (R.113) ou le tétrachlorodifluoroethane (R 112), le chlorodifluorométhane (R22), le chloro-pentafluorométhane (R115), le dichlorodifluoro-méthane (R12), le dichlorofluorométhane (R21), le chlorodifluorobromométhane (R12 B1), le dichlo-rotétrafluoroéthane (R114), ou un alcool tel que le butanol ou le pentanol, une cétone telle que la méthylisobutylcétone, un ether tel que le méthyl-n-butylether, le dipropylether ou le dibutylether.

Un essai préalable simple permettra plus généralement de déterminer si un mélange particulier de fluide (F) et de solvant répond aux conditions de l'invention, c'est-à-dire on vérifiera que le fluide (F) à l'état liquide est au moins en partie immiscible avec la solution de dioxyde de carbone dans le solvant (S) et que le fluide (F) est vaporisable dans les conditions de l'étape (e) et condensable dans les conditions de l'étape (a).

Le choix du fluide (F) optimal dépend pour une application donnée des températures de fonctionnement.

Le fluide (F) ne doit pas nécessairement être un corps pur et peut être constitué par le mélange de deux ou plusieurs constituants distincts. La composition du mélange détermine la valeur de la tension de vapeur du mélange et il est donc possible de se placer dans des conditions optimales pour le procédé.

La deuxième condition définissant le fluide (F) impose en particulier que la variation de tension de vapeur du fluide (F) entre la température de l'étape d'évaporation (e) et la température de l'étape d'absorption (a) soit inférieure à la tension de vapeur du dioxyde de carbone à la température fixée à l'évaporateur (e).

Le procédé est illustré par des exemples 1 et 2.

EXEMPLE 1

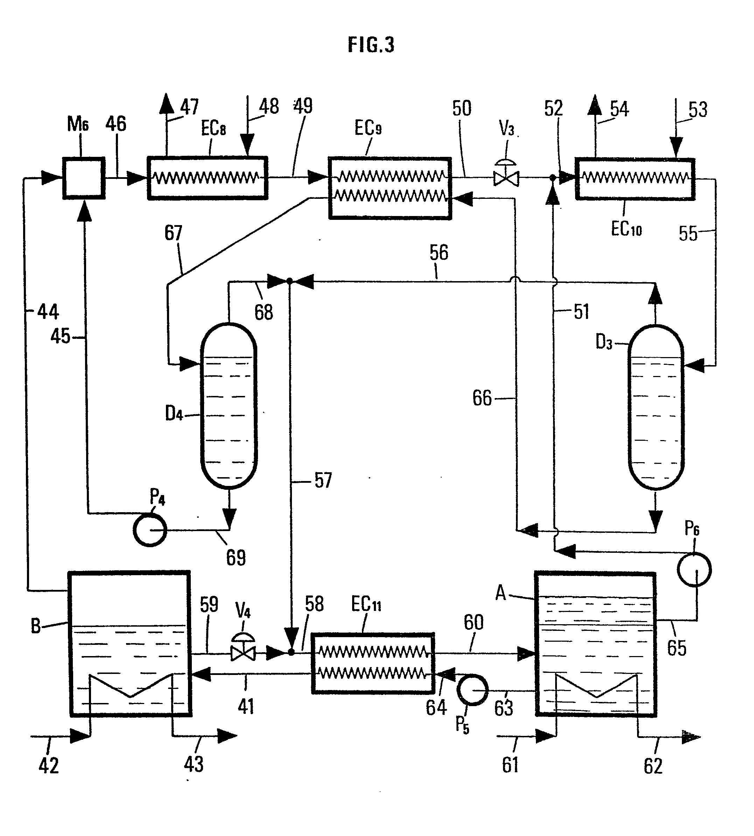

L'exemple 1 est décrit en référence au schéma de la figure 3. Dans cet exemple le dioxyde de carbone est absorbé et désorbé dans deux solutions aqueuses de diéthanolamine (DEA) huit fois normale (8 N) à des concentrations en dioxyde de carbone différentes, le fluide auxiliaire de travail étant l'isopentane iC5.

Par la canalisation 41 on introduit à une température proche de 150°C dans un bouilleur B une phase liquide de dioxyde de carbone dont le rapport molaire de 0,15 est évalué par le rapport du nombre de moles de $CO_2$ au nombre de moles de DEA dans le solvant aqueux. Un fluide extérieur (conduits 42 et 43) apporte une puissance thermique (10 KW) qui porte la température de la phase liquide à 160°C. Il se produit pendant l'élévation de température une désorption du dioxyde de carbone dont la pression au dessus de la phase liquide s'élève aux environs de 20 atmosphères. La phase liquide s'appauvrit simultanément en dioxyde de carbone et le rapport molaire défini ci-dessus s'abaisse à la valeur de 0,06.

La phase vapeur riche en dioxyde de carbone est évacuée par le conduit 44 vers le mélangeur M6 où se produit un contact intime entre cette phase vapeur et une phase liquide de $CO_2$ dans une solution aqueuse de DEA introduite par la pompe P4 et le conduit 45 au débit horaire de 661 l/h. Cette phase liquide provenant d'une étape de désorption possède un rapport molaire $CO_2$/DEA de 0,575.

Le mélange est introduit par le conduit 46 dans un échangeur EC8 qui permet l'absorption du dioxyde de carbone dans la phase liquide en évacuant dans un fluide externe (conduits 47 et 48) le dégagement de chaleur d'une telle absorption.

En limitant l'échange thermique à une température de 40°C on obtient une solution aqueuse d'amine dont la richesse en $CO_2$ dissous s'exprime par son nouveau rapport molaire $CO_2$/DEA de 0,72.

Evacué par le conduit 49 le mélange traverse l'échangeur EC9 pour y poursuivre l'absorption du $CO_2$ en abaissant la température de la solution aqueuse à 5 °C dans l'échangeur EC9. Simultanément la solution aqueuse de DEA s'enrichit en $CO_2$ pour atteindre le rapport molaire $CO_2$/DEA de 0,83.

Cette phase liquide enrichie en $CO_2$ ressort de l'échangeur EC9 par le conduit 50, pour être détendu de 20 atmosphères à 1,2 atmosphères par la vanne de détente V3.

Par le conduit 51 on introduit de l'isopentane liquide à une température proche de 10 °C, pour former une émulsion liquide, liquide dans le conduit 52. Au niveau de l'échangeur EC10 il se produit simultanément l'évaporation de l'isopentane et une désorption du $CO_2$ de la solution aqueuse de $CO_2$.

La chaleur, de bas niveau thermique, nécessaire à cette double transformation est apportée au système par un fluide externe qui entre par le conduit 53 et ressort par le conduit 54. La puissance thermique consommée est de 10 360 Watts, ce qui représente un gain de 19% en comparaison de la puissance thermique prise par la seule désorption du dioxyde de carbone (8710 watts). La température de sortie de EC10 est de 0 °C.

Par le conduit 55 on évacue donc à 0 °C et sous une pression totale de 1,55 atmosphère (résultat de la somme des deux pressions partielles 1,2 atmosphère pour le $CO_2$ et 0,35 atmosphère pour l'isopentane) un mélange de gaz $CO_2$ et isopentane ainsi qu'une phase liquide de solution aqueuse de DEA appauvrie en $CO_2$ (rapport molaire 0,675).

La séparation de la phase gazeuse et de la phase liquide s'opère dans le décanteur D3.

La phase gazeuse composée de $CO_2$ et d'isopentane est évacuée par la canalisation 56 et reçoit une fraction de dioxyde de carbone provenant d'un décanteur D4 avant d'être introduite par les conduits 57 et 58 dans l'échangeur EC11 avec une phase liquide à 160 °C, détendue par la vanne V4 et issue par le conduit 59 du bouilleur B. Il se produit dans l'échangeur EC11 une absorption partielle du gaz $CO_2$ dans la solution solvante avec dégagement de chaleur qui est cédée à une solution aqueuse de DEA après son passage dans l'absorbeur A.

En sortie d'échangeur à une température de 65 °C il reste encore du dioxyde de carbone dans la phase gazeuse. Le mélange des phases gazeuse et liquide est conduit par la canalisation 60 dans l'absorbeur A.

Un circuit de refroidissement (conduits 61 et 62) récupère la chaleur d'absorption du $CO_2$ dans la solution d'amine ainsi que la chaleur de condensation de l'isopentane jusqu'à 32 °C et la pression partielle du $CO_2$ en équilibre avec la solution de solvant s'élève à 1,2 atmosphère. La pression totale dans EC10 est de 1,55 atmosphère et, avec une perte de charge entre l'évaporateur-désorbeur EC10 et l'absorbeur A d'environ 0,09 atmosphère, on obtient une pression partielle d'isopentane dans l'absorbeur de 1,26 atmosphère, ce qui correspond à la pression de vapeur saturante de ce corps à 32 °C. Il y a condensation d'isopentane simultanément à l'absorption partielle du $CO_2$ dans la solution aqueuse de DEA.

L'isopentane liquide et la solution aqueuse étant peu miscibles mutuellement, il y a séparation des phases liquides dans l'absorbeur A.

La solution aqueuse d'amine chargée en dioxyde de carbone (rapport molaire 0,5) est reprise par la canalisation 63 vers la pompe P5 qui lui fait traverser la conduite 64 et l'échangeur EC11 pour être préchauffée avant son introduction par le conduit 41 dans le bouilleur B.

L'isopentane liquide est réintroduit dans l'échangeur EC10 par le conduit 65, la pompe de circulation P6 et le tube 51.

La phase liquide séparée dans le décanteur D3 et provenant de l'étape de désorption de l'échangeur EC10 est extraite par le conduit 66 et réchauffée dans l'échangeur EC9 jusqu'à 35 °C en continuant à désorber une partie du dioxyde de carbone qu'elle contient. En sortie de l'échangeur EC9 la phase liquide qui est reprise par le conduit 67 est appauvrie en $CO_2$ (rapport molaire $CO_2$/DEA de 0,575). Une séparation liquide gaz se produit dans le décanteur D4 et l'on peut récupérer par le conduit 68 une phase gazeuse de $CO_2$ réintroduite dans la canalisation 57 et une phase liquide qui est aspirée par le conduit 69 par la pompe P4 avant son introduction par le conduit 45 dans le mélangeur M6.

Le procédé selon l'invention, qui associe un cycle utilisant le dioxyde de carbone en absorption-désorption à une boucle de fluide auxiliaire permet dans le cas de cet exemple 1 d'augmenter la puissance nécessaire à l'évaporateur désorbeur EC10 de 1650 Watts en comparaison des 8710 Watts requis sans isopentane.

Le coefficient de performance d'un tel systeme, fonctionnant en pompe à chaleur, défini comme le rapport de la chaleur récupérable à la chaleur de haut niveau thermique passe de 18710/10000 soit 1,87 à (18710 + 1650)/10000 soit 2,03.

EXEMPLE 2

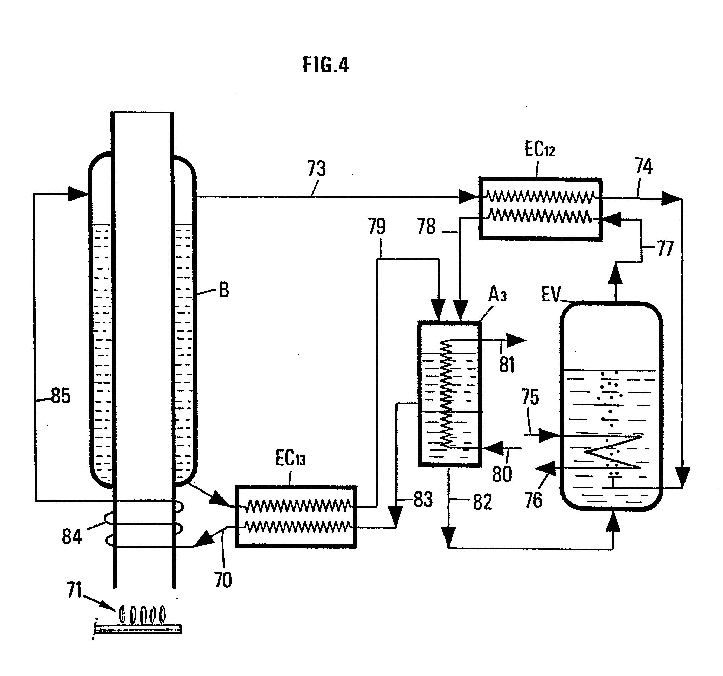

Cet exemple 2 est illustré par la figure 4. L'invention est appliquée à un procédé utilisant le dioxyde de carbone, une solution aqueuse de diéthanolamine et un composé tel que le chlorodifluorométhane (R22).

Par cet exemple 2 non limitatif on illustre la possibilité avantageuse de l'utilisation de dioxyde de carbone avec le même solvant que dans l'exemple 1, mais en parvenant à un système ne requierant pas d'énergie auxiliaire de circulation des fluides grâce à la vaporisation puis la condensation d'un fluide tel que le R22.

La solution aqueuse de diéthanolamine DEA enrichie en dioxyde de carbone parvient dans le bouilleur B par le conduit 70 pour y être portée à 120 °C grâce à l'apport thermique venant d'une source externe 71.

Le rapport molaire défini comme le nombre de moles de $CO_2$ divisé par le nombre de moles de DEA présents dans la solution se situe à 0,3 et la pression partielle de $CO_2$ au dessus de la solution est de 15 atmosphères. La pression partielle de la solution aqueuse étant très faible, il règne donc dans le bouilleur B une pression proche de 15 atmosphères.

La phase gazeuse composée essentiellement de $CO_2$ est extraite par le conduit 73 pour parvenir dans l'échangeur EC12; elle en ressort plus froide par le conduit 74 et arrive dans l'évaporateur EV en bullant dans du R22 liquide.

Le passage de la phase vapeur $CO_2$ dans le liquide R22 entraîne la vaporisation partielle de celui-ci et le refroidissement des phases présentes dans l'évaporateur EV. Le circuit externe représenté par un serpentin entrant par le conduit 75 et sortant par le conduit 76 permet de maintenir la température dans EV aux environs de 0 °C, ce qui correspond à une pression partielle de chlorodifluorométhane de 5 atmosphères. Les enceintes étant sensiblement à des pressions égales la pression partielle de dioxyde de carbone au dessus de la phase liquide dans l'évaporateur est proche de 10 atmosphères.

La phase gazeuse ainsi constituée d'un mélange de $CO_2$ et de R22 est évacuée par le conduit 77, est réchauffée dans l'échangeur EC12 et parvient par le conduit 78 dans l'absorbeur A3.

Le conduit 79 permet le retour de la solution aqueuse de diéthanolamine appauvrie en dioxyde de carbone.

Dans l'absorbeur dans lequel la températur de sortie des produits est maintenue aux environs de 38 °C par la circulation d'un fluide externe (conduits 80 et 81), la pression totale est sensiblement constante et proche de celle régnant dans l'évaporateur EV soit 15 atmosphères. Les conditions thermiques et de concentration de solution de DEA sont telles que le $CO_2$ présent dans la phase gazeuse s'absorbe. Sa pression partielle résiduelle est inférieure à 0,1 atmosphère. La phase vapeur résiduelle est donc essentiellement constituée de R22 à près de 15 atmosphères, pression telle qu'elle se condense en une phase liquide immiscible avec la solution aqueuse de DEA.

Le condensat de R22 retourne par le conduit 82 à l'évaporateur EV. La solution aqueuse de DEA enrichie en $CO_2$ est évacuée aux environs de 38 °C par le conduit 83, parvient à l'échangeur EC13, pour y être réchauffée par un flux croisé venant du bouilleur en dégageant une fraction du gaz $CO_2$ absorbé.

Ce phénomène amplifié dans le serpentin 84 chauffé par la source 71 permet au mélange liquide-vapeur de remonter (gas-lift) dans la canalisation 85.

Le procédé schématisé par la figure 4 n'est qu'un exemple de réalisation de l'invention, de nombreuses variantes de disposition d'échangeurs pouvant être adoptées pour transférer des puissances thermiques à différents points du cycle décrit.

Les conditions de fonctionnement présentées dans les exemples ne doivent pas être considérées comme limitatives.

D'autres couples utilisant le dioxyde de carbone peuvent être considérés.

Le solvant du dioxyde de carbone peut être également l'eau seule ou bien encore un solvant organique; le fluide auxiliaire de travail peut être également un hydrocarbure, un hydrocarbure halogéné ou encore faire partie de la famille des alcools.

Le procédé peut être conçu à des échelles de puissance thermique très variables de quelques centaines de watts à plusieurs mégawatts.

Des équipements très divers peuvent être utilisés pour réaliser le procédé selon l'invention.

Les échangeurs peuvent être du type d'échangeur à tubes et calandres ou bien des échangeurs à plaques.

Les étapes d'absorption et de désorption peuvent être menées dans des colonnes du type de celles qui sont le plus fréquemment utilisées en génie chimique pour mener ce genre d'opérations avec des plateaux ou des garnissages ou d'autres dispositifs comportant éventuellement une agitation mécanique.

La température des étapes de désorption ou d'évaporation dans l'évaporateur peut se situer utilement dans une gamme de température allant de $-40$ °C à 80 °C.

La température de condensation ou d'absorption peut se situer par exemple dans une gamme de température allant de $+20$ à $+120$ °C.

La température de chauffage du bouilleur peut se situer par exemple dans une gamme de température allant de 80 °C à 250 °C.

Le dispositif est en général conçu pour fonctionner à une pression maximum inférieure à 50 atmosphères.

**Revendications**

1. Procédé d'absorption pour la production de froid et/ou de chaleur, utilisant le dioxyde de carbone et un solvant pour le dioxyde de carbone, qui comprend les étapes suivantes:

a) on met en contact, dans une étape d'absorption/condensation, du solvant avec une phase gazeuse renfermant un fluide auxiliaire et du dioxyde de carbone, de manière à obtenir une solution de dioxyde de carbone dans le solvant et une phase liquide de fluide auxiliaire, la phase liquide de fluide auxiliaire étant au moins en partie immiscible avec la solution de dioxyde de carbone dans le solvant, le fluide auxiliaire étant un fluide vaporisable dans les conditions de l'étape (e) et condensable dans les conditions de l'étape (a), et on transmet la chaleur d'absorption du dioxyde de carbone dans le solvant et la chaleur de condensation du fluide auxiliaire à un fluide extérieur,

b) on sépare la solution de dioxyde de carbone dans le solvant de la phase liquide de fluide auxiliaire,

c) on envoie la solution de dioxyde de carbone dans le solvant à une étape de désorption et l'on soumet cette solution aux conditions de désorption, en prélevant la chaleur de désorption sur un fluide extérieur, de manière à obtenir du solvant appauvri en dioxyde de carbone et une phase vapeur riche en dioxyde de carbone et on recycle ledit solvant, appauvri en dioxyde de carbone, à l'étape d'absorption/condensation (a),

d) on mélange au moins une partie de la phase liquide de fluide auxiliaire, séparée à l'étape (b), avec au moins une partie de la phase vapeur riche en dioxyde de carbone obtenue dans l'étape de désorption (c),

e) on soumet le mélange obtenu à l'étape (d) à une étape d'évaporation, en prélevant la chaleur d'évaporation du fluide auxiliaire sur un fluide extérieur et on recueille une phase gazeuse renfermant du fluide auxiliaire et du dioxyde de carbone, et

f) on soumet la phase gazeuse obtenue à l'étape (e) à une étape d'absorption/condensation (a).

2. Procédé d'absorption pour la production de froid et/ou de chaleur, utilisant le dioxyde de carbone et un solvant pour le dioxyde de carbone, qui comprend les étapes suivantes:

a) on met en contact, dans une étape d'absorption/condensation, du solvant avec une phase gazeuse renfermant un fluide auxiliaire et du dioxyde de carbone, de manière à obtenir une solution de dioxyde de carbone dans le solvant et une phase liquide de fluide auxiliaire, la phase liquide de fluide auxiliaire étant au moins en partie immiscible avec la solution de dioxyde de carbone dans le solvant, le fluide auxiliaire étant un fluide vaporisable dans les conditions de l'étape (f) et condensable dans les conditions de l'étape (a), et on transmet la chaleur d'absorption du dioxyde de carbone dans le solvant et la chaleur de condensation du fluide auxiliaire à un fluide extérieur,

b) on sépare la solution de dioxyde de carbone dans le solvant de la phase liquide de fluide auxiliaire,

c) on envoie la solution de dioxyde de carbone dans le solvant à une étape de désorption et l'on soumet cette solution aux conditions de désorption, en prélevant la chaleur de désorption sur un fluide extérieur, de manière à obtenir du solvant appauvri en dioxyde de carbone et une phase vapeur riche en dioxyde de carbone et on recycle ledit solvant, appauvri en dioxyde de carbone, à l'étape d'absorption/condensation (a),

d) on mélange la phase vapeur riche en dioxyde de carbone, obtenue à l'étape (c), avec du solvant, de façon à dissoudre le dioxyde de carbone dans ledit solvant, on évacue la chaleur de dissolution vers un milieu externe et on détend la pression,

e) on mélange au moins une partie de la phase liquide de fluide auxiliaire, séparée à l'étape (b), avec le produit de détente de l'étape (d),

f) on soumet le mélange obtenu à l'étape (e) à une étape d'évaporation/désorption, en prélevant la chaleur d'évaporation et de désorption sur un fluide extérieur, on sépare le solvant désorbé résultant de la phase gazeuse résultante renfermant du fluide auxiliaire et du dioxyde de carbone, et on renvoie à l'étape (d) au moins une partie dudit solvant désorbé, et

g) on soumet la phase gazeuse séparée à l'étape (f) à l'étape d'absorption/condensation (a).

3. Procédé selon la revendication 1, dans lequel le fluide auxiliaire est un hydrocarbure ou un hydrocarbure halogéné et le solvant est une solution aqueuse d'amines.

## Claims

1. Absorption process for cold and/or heat production, using carbon dioxide and a solvent for carbon dioxide, which comprises the following steps of:

a) contacting solvent with a gas phase comprising an auxiliary fluid and carbon dioxide, in an absorption/condensation step, so as to obtain a solution of carbon dioxide in the solvent and a liquid phase of auxiliary fluid, the liquid phase of the auxiliary fluid being at least partly immiscible with the solution of carbon dioxide in the solvent, the auxiliary fluid being vaporizable in the conditions of step (e) and condensable in the conditions of step (a), and transferring the heat released by the absorption of carbon dioxide into the solvent and the heat released by the condensation of the auxiliary fluid to an external fluid,

b) separating the solution of carbon dioxide in the solvent from the liquid phase of auxiliary fluid,

c) supplying the solution of carbon dioxide in the solvent to a desorption step and subjecting this solution to desorption conditions, the desorption heat being received from an external fluid, so as to obtain solvent of reduced carbon dioxide content and a vapor phase of high carbon dioxide content, and recycling said solvent of reduced carbon dioxide content to the absorption/condensation step (a),

d) admixing et least a portion of the liquid phase of auxiliary fluid, separated in step (b), with at least a portion of the vapor phase of high carbon dioxide content obtained in the desorption step (c).

e) subjecting the mixture obtained in step (d) to an evaporation step, the heat required for evaporating the auxiliary fluid being received from an external fluid, and recovering a gas phase comprising auxiliary fluid and carbon dioxide, and

f) subjecting the gas phase obtained in step (e) to an absorption/condensation step (a).

2. Absorption process for cold and/or heat production, using carbon dioxide and a solvent for carbon dioxide, comprising the following steps:

a) contacting solvent with a gas phase comprising an auxiliary fluid and carbon dioxide, in an absorption/condensation step, so as to obtain a solution of carbon dioxide in the solvent and a liquid phase of auxiliary fluid, the liquid phase of auxiliary fluid being at least partly immiscible with the solution of carbon dioxide in the solvent, the auxiliary fluid being vaporizable in the conditions of step (f) and condensable in the conditions of step (a), and transferring the heat released by the absorption of carbon dioxide into the solvent and the heat released by the condensation of the auxiliary fluid to an external fluid,

b) separating the solution of carbon dioxide in the solvent from the liquid phase of auxiliary fluid,

c) supplying the solution of carbon dioxide in the solvent to a desorption step and subjecting this solution to desorption conditions, the desorption heat being received from an external fluid, so as to obtain solvent of reduced carbon dioxide content and a vapor phase of high carbon dioxide content, and recycling said solvent of reduced carbon dioxide content to the absorption/condensation step (a),

d) admixing the vapor phase of high carbon dioxide content, obtained in step (c), with solvent, so as to dissolve carbon dioxide in said solvent, supplying the dissolution heat to an external medium and releasing the pressure,

e) admixing at least a portion of the liquid phase of auxiliary fluid, separated in the step (b), with the product of the pressure release of step (d),

f) subjecting the mixture obtained in step (e) to an evaporation/desorption step, the evaporation and desorption heat being received from an external fluid, separating the resultant desorbed solvent from the resultant gas phase comprising auxiliary fluid and carbon dioxide, and supplying at least a portion of said desorbed solvent to step (d), and

g) subjecting the gas phase separated in step (f) to absorption/condensation step (a).

3. A process according to claim 1, wherein the auxiliary fluid is a hydrocarbon or a halogenated hydrocarbon and the solvent is an aqueous amine solution.

**Patentansprüche**

1. Absorptionsverfahren zur Gewinnung von Kälte und/oder Wärme unter Verwendung von Kohlendioxyd und einem Lösungsmittel für Kohlendioxyd, gekennzeichnet durch die folgenden Stufen:

a) Man bringt in einer Absorptions/Kondensations-Stufe ein Lösungsmittel in Kontakt mit einer Gasphase, die eine Hilfsflüssigkeit und Kohlendioxyd enthält, so dass man eine Lösung von Kohlendioxyd in dem Lösungsmittel und eine flüssige Phase der Hilfsflüssigkeit erhält, wobei die flüssige Phase der Hilfsflüssigkeit mindestens teilweise mit der Lösung des Kohlendioxyds im Lösungsmittel nicht-mischbar ist und die Hilfsflüssigkeit eine unter den Bedingungen der Stufe (e) verdampfbare Flüssigkeit und unter den Bedingungen der Stufe (a) kondensierbar ist, worauf man die Absorptionswärme des Kohlendioxyds im Lösungsmittel und die Kondensationswärme der Hilfsflüssigkeit auf eine Aussenflüssigkeit überträgt,

b) man trennt die Lösung des Kohlendioxyds im Lösungsmittel von der flüssigen Phase der Hilfsflüssigkeit,

c) man schickt die Lösung des Kohlendioxyds im Lösungsmittel in eine Desorptionsstufe und unterwirft diese Lösung Desorptions-Bedingungen, wobei man die Desorptionswärme einer Aussenflüssigkeit entnimmt, so dass man ein Lösungsmittel erhält, das an Kohlendioxyd arm ist, sowie eine Dampfphase, die reich an Kohlendioxyd ist, worauf man dieses an Kohlendioxyd arme Lösungsmittel im Kreislauf in die Absorptions/Kondensations-Stufe (a) zurückleitet,

d) man mischt mindestens einen Teil der flüssigen Phase der Hilfsflüssigkeit, die in Stufe (b) abgetrennt wurde, mit mindestens einem Teil der an Kohlendioxyd reichen Dampfphase, die man in der Desorptionsstufe (c) erhalten hat,

e) man unterwirft das in Stufe (d) erhaltene Gemisch einer Verdampfungsstufe, wobei man die Verdampfungswärme der Hilfsflüssigkeit einer Aussenflüssigkeit entnimmt, und sammelt eine Gasphase, die Hilfsflüssigkeit und Kohlendioxyd enthät,

f) man unterwirft die in Stufe (e) erhaltene Gasphase einer Absorptions/Kondensationsstufe (a).

2. Absorptionsverfahren zur Gewinnung von Kälte und/oder Wärme unter Verwendung von Kohlendioxyd und einem Lösungsmittel für Kohlendioxyd, gekennzeichnet durch folgende Stufen:

a) Man bringt in einer Absorptions/Kondensations-Stufe ein Lösungsmittel mit einer Gasphase in Kontakt, welche eine Hilfsflüssigkeit und Kohlendioxyd enthält, so dass man eine Lösung von Kohlendioxyd im Lösungsmittel und eine flüssige Phase der Hilfsflüssigkeit erhält, wobei die flüssige Phase der Hilfsflüssigkeit mindestens teilweise mit der Lösung des Kohlendioxyds im Lösungsmittel nicht-mischbar ist, und die Hilfsflüssigkeit eine unter den Bedingungen der Stufe (f) verdampfbare Flüssigkeit und unter den Bedingungen der Stufe (a) kondensierbar ist, worauf man die Absorptionswärme des Kohlendioxyds im Lösungsmittel und die Kondensationswärme der Hilfsflüssigkeit einer Aussenflüssigkeit entnimmt,

b) man trennt die Lösung des Kohlendioxyds im Lösungsmittel von der flüssigen Phase der Hilfsflüssigkeit,

c) man leitet die Lösung des Kohlendioxyds im Lösungsmittel in eine Desorptions-Stufe und unterwirft diese Lösung Desorptions-Bedingungen, wobei die Desorptionswärme einer Aussenflüssigkeit entnommen wird, so dass man ein Lösungsmittel erhält, das an Kohlendioxyd arm ist, sowie eine Dampfphase, die an Kohlendioxyd reich ist, und man leitet dieses an Kohlendioxyd arme Lösungsmittel im Kreislauf in die Absorptions/Kondensations-Stufe (a) zurück,

d) man mischt die an Kohlendioxyd reiche Dampfphase, die in Stufe (c) erhalten wurde, mit dem Lösungsmittel, so dass sich das Kohlendioxyd in dem Lösungsmittel löst, und man entfernt die Lösungswärme zu einem Aussenmilieu und entspannt den Druck,

e) man vermischt mindestens einen Teil der flüssigen Phase der Hilfsflüssigkeit, die in Stufe (b) abgetrennt wurde, mit dem Entspannungsprodukt der Stufe (d),

f) man unterwirft die in Stufe (e) erhaltene Mischung einer Verdampfungs-/Desorptions-Stufe, wobei man die Verdampfungswärme und die Desorptionswärme einer Aussenflüssigkeit entnimmt, worauf man das erhaltene desorbierte Lösungsmittel von der erhaltenen Gasphase trennt, die die Hilfsflüssigkeit und das Kohlendioxyd enthält, und mindestens einen Teil des desorbierten Lösungsmittels wieder in die Stufe (d) zurückleitet,

g) man unterwirft die in Stufe (f) abgetrennte Gasphase einer Absorptions/Kondensations-Stufe (a).

3. Verfahren gemäss Anspruch 1, dadurch gekennzeichnet, dass die Hilfsflüssigkeit ein Kohlenwasserstoff oder ein halogenierter Kohlenwasserstoff und das Lösungsmittel eine wässrige Aminlösung ist.

FIG.1

FIG. 2

# FIG.3

## FIG.4